# EUROPEAN PATENT APPLICATION

(11) **EP 3 257 918 A1**
(43) Date of publication of application: **20.12.2017**
(21) Application number: 16748641.4
(22) Date of filing: 01.02.2016
(51) Int. Cl.: C10G 67/02

(54) **HYDROTREATMENT METHOD FOR LOW-TEMPERATURE FISCHER-TROPSCH SYNTHESIS PRODUCT**

(30) Priority: 11.02.2015 CN 201510071747
(71) Applicant: Wuhan Kaidi Engineering Technology Research Institute Co., Ltd., Wuhan, Hubei 430223 (CN)
(72) Inventor: LAI, Bo, Wuhan Hubei 430212 (CN); SHI, Youliang, Wuhan Hubei 430212 (CN); XU, Li, Wuhan Hubei 430212 (CN)
(74) Representative: Zeuner Summerer Stütz
(86) International application number: PCT/CN2016/073024
(87) International publication number: WO 2016/127840

(57) **Abstract**

The hydrotreatment method for a low-temperature Fischer-Tropsch synthesis product of the present invention comprises the following steps of: (1) firstly, mixing a Fischer-Tropsch wax with a sulfur-containing liquid catalyst in a certain proportion, then putting same into contact with hydrogen gas, then firstly feeding same into a first reaction region of a hydrogenation pretreatment catalyst, and then feeding the effluent of the first reaction region into a second reaction region filled with a hydrocracking catalyst and carrying out a hydrocracking reaction; (2) feeding a hydrocracking product of the second reaction region, together with a Fischer-Tropsch naphtha and diesel oil, into a third reaction region so as to come into contact with a hydrofining catalyst, and carrying out a hydrofining reaction; then feeding the effluent of the hydrofining reaction into a fourth reaction region so as to come into contact with a hydroisomerizing pour point depression catalyst, and carrying out a isomerizing pour point depression reaction; and (3) feeding the effluent of the fourth reaction region into a gas-liquid separation system C, wherein a hydrogen-rich gas is separated therefrom and recycled, and a liquid product is fed into a fractionation system D and separated so as to obtain naphtha, diesel oil and a tail oil, wherein the tail oil is circulated back to the second reaction region. By means of the present invention, the density of the synthesized diesel oil can be increased, the condensation point can be decreased, and the indexes for an automotive diesel oil can be achieved.

## Description

### FIELD OF THE INVENTION

The present disclosure relates to a hydrotreatment method of low-temperature Fischer-Tropsch synthesis product, and more particularly to a method of acquiring a low pour point high-quality diesel fuel through hydrotreatment of low-temperature Fischer-Tropsch synthetic whole fraction product.

### BACKGROUND OF THE INVENTION

Along reducing oil resources and increasingly strict environmental protection laws and regulations of the countries of the world, technological development of alternative clean energy source attracts more and more attentions gradually; and the Fischer-Tropsch synthesis technology has received much concern because it can be used to produce the high-quality clean fuel from coal, natural gas, biomass and other raw materials. The Fischer-Tropsch synthesis technology includes a high-temperature Fischer-Tropsch synthesis technology and a low-temperature Fischer-Tropsch synthesis technology according to reaction temperatures. Ingredients of a Fischer-Tropsch synthesis product are greatly different from those of petroleum; and due to limitation of Anderson-Schulz-Flory rules, its main products include C₄-C₇₀-containing hydrocarbon and a little complicated mixture containing oxygen compound, with low aromatic hydrocarbon and without sulfur, nitrogen and metal. The low-temperature Fischer-Tropsch synthesis product is mainly composed of straight-chain paraffin and olefin and contains a little oxygen compound; further, the product contains nearly 40% wax, its pour point is too high although its cetane number exceeds 70; and the product has poor cold flow property and cannot be used as the transport fuel directly. Moreover, all fractions in Fischer-Tropsch synthesis product shall be subjected to corresponding hydrotreatment and upgrading in order to acquire a qualified product.

One of the main purposes of Fischer-Tropsch synthesis technology is to produce a high-quality diesel fuel. The low-temperature Fischer-Tropsch synthesis product has high straight-chain paraffin, high pour point, low density and other characteristics; accordingly, the diesel fuel fraction after hydrotreatment is featured with high pour point and low density and cannot be sold directly as the commercial diesel fuel. Further, the product contains a certain amount of olefin which may lead to coking and deactivation of a catalyst because the catalyst can easily release a plenty of heat locally during hydrotreatment and conversion; and excessive release of heat may cause rapid temperature rise of a catalyst bed and is bad for controlling the bed temperature. Therefore, an appropriate method shall be taken to process the low-temperature Fischer-Tropsch synthesis product in order to acquire the high-quality diesel fuel product.

U. S. Patent No. US6858127 disclosed a method of producing a middle distillate; and the method includes steps of hydrocracking at least one part of synthesis oil, separating kerosene fractions and diesel fuel fractions therein, hydrocracking tail oil and the kerosene fractions and diesel fuel fractions in the separated product, wherein the density of the diesel fuel fractions is 0.78g/cm³, and the pour point is at -28∼0 °C. The defect of the method is that the density of the diesel fuel fractions is low and cannot achieve the index of diesel fuel for vehicle.

Chinese Patent Application No. CN200510068183.1 provided a process method of implementing hydrotreatment and upgrading of Fischer-Tropsch synthesis product. In the method, hydrotreatment is implemented for three ingredients including a high-temperature condensate, a low-temperature condensate and synthetic wax acquired through natural separation of a Fischer-Tropsch synthesis reaction, wherein the high-temperature condensate and the low-temperature condensate are put into a hydrotreatment reactor after mixed and generate hydrodeoxygenation, olefin saturation and other reactions at 250-420 °C in presence of hydrogen (hydrogen partial pressure: 2.0-15.0MPa) and hydrofining catalyst; the product after hydrogenation enters a fractionating tower and is cut into naphtha, diesel fuel and heavy oil fraction. The heavy oil fraction and the synthetic wax enter into an isocracking reactor after mixed and generate isocracking reaction at 300-450 °C in presence of hydrogen (hydrogen partial pressure: 2.0-15.0 MPa) and catalyst. The product after isocracking is cut into naphtha, diesel fuel and tail oil fraction after fractioning. The tail oil fraction is recycled back to the isocracking reactor to continue cracking or used as a base oil material of lubricating oil. The yield of diesel fuel product produced through this method is more than 85 wt. %, and the cetane number exceeds 80. Further, the defect of this method is that the catalyst may be coked easily if the Fischer-Tropsch condensate is sent to the hydrofining catalyst reactor, accordingly the inactivation rate is accelerated and the operating cycle of refining is shortened; and the synthetic wax enters into the hydrocracking reactor without hydrofining, thereby leading to increasing investment of hydrocracking.

Chinese Patent Application No. CN200710065309 disclosed a hydrotreatment process of Fischer-Tropsch synthetic oil; and the method includes steps of implementing hydrotreatment for the Fischer-Tropsch synthesis oil whole fraction first, then separating the diesel fuel fraction 1 from the product, hydrocracking the tail oil fraction, and separating the diesel fuel fraction 2 from the hydrocracking product again, wherein the pour point of the diesel fuel fraction 1 is at 2-5 °C, and the pour point of the diesel fuel fraction 2 is at -50 °C. This method can produce one part of low pour point diesel fuel but has complicated process; and the process includes two separation systems, with high cost.

Chinese Patent Publication No. CN10320527A provides a method of transforming Fischer-Tropsch synthesis product into naphtha, diesel fuel and liquefied petroleum gas. The process includes steps of hydrofining the Fischer-Tropsch synthesis oil and wax first, hydrocracking the tail oil after refining, implementing hydrodewaxing reaction for the heavy diesel ingredients to acquire the low pour point diesel fuel. This process is complicated, and the diesel fuel product acquired has low density and cannot meet the index of diesel fuel for vehicle.

### SUMMARY OF THE INVENTION

In view of the above-described problems, it is one objective of the invention to provide a method of hydrotreatment of low-temperature Fischer-Tropsch synthesis products to yield low pour point synthetic diesel fuel; the hydrotreatment method features a simple process and low energy consumption, and the synthesized diesel fuel has relatively high density.

To achieve the above objective, in accordance with one embodiment of the invention, there is provided a method of hydrotreatment of low-temperature Fischer-Tropsch synthesis products, the method comprising:
1) mixing Fischer-Tropsch wax with a sulfur-containing liquid crystal at a certain proportion, contacting a resulting mixture with hydrogen, feeding a hydrogen-containing mixture to a first reaction region comprising a hydrogenation pretreatment catalyst, feeding an effluent from the first reaction region to a second reaction region comprising a hydrocracking catalyst, and carrying out hydrocracking reaction;
2) feeding a hydrocracking product from the second reaction region and Fischer-Tropsch naphtha and diesel fuel to a third reaction region comprising a hydrofining catalyst, carrying out hydrofining reaction; feeding an effluent from the hydrofining reaction to a fourth reaction region comprising a hydroisomerizing pour-point depressant catalyst, and carrying out isomerizing pour-point depression reaction; and
3) feeding an effluent from the fourth reaction region to a gas-liquid separation system C to yield hydrogen-rich gas and liquid products, recycling the hydrogen-rich gas, feeding the liquid products to a distilling system D, to yield naphtha, diesel fuel and tail oil, and returning the tail oil to the second reaction region.

In a class of this embodiment, the sulfur-containing liquid catalyst in 1) is inferior catalytic cracking diesel fuel or coking diesel fuel; and the sulfur-containing liquid catalyst accounts for 20-50 wt. % of a total of the sulfur-containing liquid catalyst and the Fischer-Tropsch wax.

In a class of this embodiment, in 1), the hydrogenation pretreatment is carried out under the following conditions: a reaction temperature is at 300-370 °C; a hydrogen partial pressure is 4.0-10 MPa; a volume velocity is 0.5-2.0 h⁻¹; and a volume ratio of hydrogen to oil is 500-1500.

In a class of this embodiment, in 1), the hydrocracking reaction is carried out under the following conditions: a reaction temperature is at 330-410 °C; a hydrogen partial pressure is 4.0-10 MPa; a volume velocity is 0.4-6.0 h⁻¹; and a volume ratio of hydrogen to oil is 600-1500.

In a class of this embodiment, in 2), the hydrofining reaction is carried out under the following conditions: a reaction temperature is at 280-340 °C; a hydrogen partial pressure is 4.0-10 MPa; a volume velocity is 0.4-6.0 h⁻¹; and a volume ratio of hydrogen to oil is 500-1200.

In a class of this embodiment, in 2), the isomerizing pour-point depression reaction is carried out under the following conditions: a reaction temperature is at 280-400 °C; a hydrogen partial pressure is 4.0-10 MPa; a volume velocity is 0.4-6.0 h⁻¹; and a volume ratio of hydrogen to oil is 400-1200.

In a class of this embodiment, the hydrogenation pretreatment or hydrofining catalyst comprises a carrier selected from aluminum oxide or silicon-containing aluminum oxide and a hydrogenation active metal loaded on the carrier; the hydrogenation active metal comprises at least two active ingredients of non-noble metals of VIB and/or VIII family; and the content of active metal oxides is 25-40 wt. % of a total weight of the catalyst.

In a class of this embodiment, the hydrocracking catalyst comprises an acidic material as a carrier selected from amorphous silica-alumina, molecular sieve, or a mixture thereof, and a hydrogenation active metal which is a combination of a VIB-family metal element comprising molybdenum (Mo) and Tungsten (W) and a VIII-family metal element comprising cobalt (Co), Nickle (Ni), platinum (Pt) and palladium (Pd). The content of active metal oxides is 25-40 wt. % of a total weight of the catalyst.

In a class of this embodiment, the carrier of the hydrocracking catalyst is a combination of amorphous silica-alumina and one or more selected from a Y-type molecular sieve, a β molecular sieve, a ZSM molecular sieve and an SAPO molecular sieve; and the hydrogenation active metal is a combination of W-Ni, Mo-Ni or Mo-Co.

In a class of this embodiment, the tail oil separated in 3) is recycled completely or partially to the second reaction region for hydrocracking.

Advantages of the method of hydrotreatment of low-temperature Fischer-Tropsch synthesis products of the invention are as follow: the method in the invention fully makes full use of characteristics of Fischer-Tropsch synthesis product and can improve the density of the synthetic diesel fuel while confirming the suitable process flow and doping the liquid catalyst at certain proportion; and because the hydrofining, hydrocracking and isomerizing catalysts are non-noble metal catalysts, H2S which can keep certain concentration still in recycle hydrogen is required to maintain the activity of the catalyst during reaction; while the Fischer-Tropsch synthesis product does not contains sulfur, and the liquid catalyst added in the invention contains sulfur playing a role of vulcanizing agent. Further, the Fischer-Tropsch light ingredients also contain a certain amount of olefin and a little oxygen-contained compound which may generate a plenty of heat if it is subjected to individual hydrofining and lead to coking and inactivation of the catalyst easily due to excessive local heat release of the catalyst; and the excessive heat release may also lead to rapid temperature rise of the catalyst bed and bad for controlling the temperature of the bed; therefore, a plenty of cold hydrogen shall be injected in order to control the temperature. The Fischer-Tropsch wax containing a little unsaturated olefin is subjected to hydrogenation pretreatment and hydrocracking in the invention; the effluent plays a role of storing heat, thereby offering heat and hydrogen-rich gas to the hydrofining reaction and generating a "hot trap" of heat for the hydrofining. As a result, it is good for controlling the temperature of the catalyst bed, reduces the quench cooling hydrogen required by a hydrofining section greatly and reduces energy consumption. Through the method, the density of the synthetic diesel fuel is improved, the pour point is lowered, and the synthetic diesel fuel achieves the indexes of diesel fuel for vehicle.

### BRIEF DESCRIPTION OF THE DRAWINGS

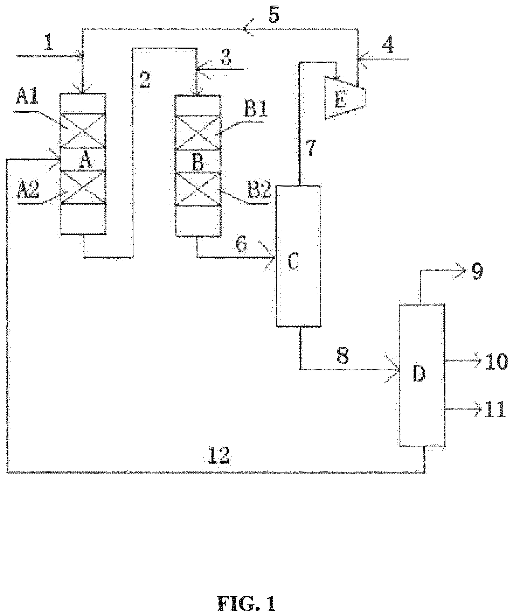

FIG. **1** is a flow chart of a method of hydrotreatment of low-temperature Fischer-Tropsch synthesis products according to one embodiment of the invention.

### DETAILED DESCRIPTION OF THE EMBODIMENTS

The following further describes a method of hydrotreatment of low-temperature Fischer-Tropsch synthesis products in detail in combination with FIG. **1****.**

As shown in the figure, a first reactor **A** comprises a first reaction region **A1** and a second reaction region **A2** in longitudinal direction; a hydrogenation pretreatment catalyst is placed on a bed of the first reaction region **A1,** and a hydrocracking catalyst is placed on the bed of the second reaction bed **A2;** and rich hydrogen is fed inward through a pipe **5** from a top of the first reactor **A.** 1) Fischer-Tropsch wax and a sulfur-containing liquid catalyst are mixed and then mingled with the rich hydrogen after entering into the first reactor **A** through a pipe **1**; a mixture is subjected to hydrogenation pretreatment in the first reaction region **A1** first, and the reaction effluent enters into the second reaction region **A2** to carry out hydrocracking.
2) A second reactor **B** comprises a third reaction region **B1** and a fourth reaction region **B2** in longitudinal direction; and a hydrofining catalyst is placed on the bed of the third reaction region **B1**, and the hydrocracking catalyst is placed on the bed of the fourth reaction bed **B2.**
3) A cracked product from the second reaction region **A2** is mixed with Fischer-Tropsch light ingredients (Fischer-Tropsch diesel fuel and naphtha) through a pipe **2** and fed into the third reaction region **B1** of the second reactor **B** through a pipe **3** for hydrofining reaction; the product after refining enters the fourth reaction region to carry out a hydroisomerizing pour point depressant reaction. The product after pour point depressant reaction enters into a gas-liquid separator **C** through a pipe **6,** the gas phase ingredients (mainly referring to hydrogen and containing sulfureted hydrogen at the same time) enters into a circulating compressor E through a pipe **7;** the hydrogen-rich gas after compression is mixed with the new hydrogen of a pipe **4** and are fed inward from the top of the first reactor **A** through a pipe **5.** Liquid phase ingredients enter into a fractioning system **D** through a pipe **8** for fractioning to acquire dry gas **9,** naphtha **10,** diesel fuel **11** and tail oil **12.** Furthermore, the tail oil **12** is recycled completely or partially to the second reaction region **A2** in the first reactor **A** for recycle cracking.

The sulfur-containing liquid catalyst in the step 1) is inferior catalytic cracking diesel fuel and coking diesel fuel; and the sulfur-containing liquid catalyst accounts for 10-65 wt. % of a total of the sulfur-containing liquid catalyst and the Fischer-Tropsch wax, particularly, 20-50 wt. %.

In 1), the hydrogenation pretreatment is carried out under the following conditions: a reaction temperature is at 280-390 °C; a hydrogen partial pressure is 2.0-15 MPa; a volume velocity is 0.4-6.0 h⁻¹; and a volume ratio of hydrogen to oil is 300-2000.

Preferably, the hydrogenation pretreatment is carried out under the following conditions: a reaction temperature is at 300-370 °C; a hydrogen partial pressure is 4.0-10 MPa; a volume velocity is 0.5-2.0 h⁻¹; and a volume ratio of hydrogen to oil is 500-1500.

In 1), the hydrocracking reaction is carried out under the following conditions: a reaction temperature is at 300-450 °C; a hydrogen partial pressure is 2.0-15 MPa; a volume velocity is 0.4-6.0 h⁻¹; and a volume ratio of hydrogen to oil is 300-2000.

Preferably, in 1), the hydrocracking reaction is carried out under the following conditions: a reaction temperature is at 330-410 °C; a hydrogen partial pressure is 4.0-10 MPa; a volume velocity is 0.4-6.0 h⁻¹; and a volume ratio of hydrogen to oil is 600-1500.

In 2), the hydrofining reaction is carried out under the following conditions: a reaction temperature is at 250-380 °C; a hydrogen partial pressure is 2.0-15 MPa; a volume velocity is 0.4-6.0 h⁻¹; and a volume ratio of hydrogen to oil is 300-2000. Preferably, the hydrofining reaction is carried out under the following conditions: a reaction temperature is at 280-340 °C; a hydrogen partial pressure is 4.0-10 MPa; a volume velocity is 0.4-6.0 h⁻¹; and a volume ratio of hydrogen to oil is 500-1200.

In 2), the isomerizing pour-point depression reaction is carried out under the following conditions: a reaction temperature is at 250-450 °C; a hydrogen partial pressure is 2.0-15 MPa; a volume velocity is 0.4-6.0 h⁻¹; and a volume ratio of hydrogen to oil is 300-2000. Preferably, the isomerizing pour-point depression reaction is carried out under the following conditions: a reaction temperature is at 280-400 °C; a hydrogen partial pressure is 4.0-10 MPa; a volume velocity is 0.4-6.0 h⁻¹; and a volume ratio of hydrogen to oil is 400-1200.

The hydrogenation pretreatment or hydrofining catalyst comprises a carrier selected from aluminum oxide or silicon-containing aluminum oxide and a hydrogenation active metal loaded on the carrier; the hydrogenation active metal comprises at least two active ingredients of non-noble metals of VIB and/or VIII family; and the content of active metal oxides is 10-50 wt. % of a total weight of the catalyst, preferably, 25-40 wt. %.

The hydrocracking catalyst comprises an acidic material as a carrier selected from amorphous silica-alumina, molecular sieve, or a mixture thereof, and a hydrogenation active metal which is a combination of a VIB-family metal element comprising molybdenum (Mo) and Tungsten (W) and a VIII-family metal element comprising cobalt (Co), Nickle (Ni), platinum (Pt) and palladium (Pd). The content of active metal oxides is 10-50 wt. % of a total weight of the catalyst, preferably, 25-40 wt. %.

The acidity center of the hydrocracking catalyst has two functions: cracking and isomerization, and its carrier can be one or more selected from a Y-type molecular sieve, a β molecular sieve, a ZSM molecular sieve and an SAPO molecular sieve. Furthermore, the hydrocracking catalyst also contains the amorphous silica-alumina.

The tail oil separated in 3) can be recycled completely or partially to the second reaction region for hydrocracking.

The hydrocracking catalyst used in the method of the invention can also be existing commercial hydrofining catalysts.

A hydroisomerizing pour-point depressant catalyst used in 2) can be existing commercial hydroisomerizing pour-point depressant catalysts.

In the invention, the sulfur-containing liquid catalyst comprises the inferior catalytic cracking diesel fuel or coking diesel fuel.

To further explain the key points of the invention, the following further explains the invention in connection with the specific embodiment; however, the invention is not limited to the embodiment below.

### Example 1

Low-temperature Fischer-Tropsch wax was mixed with a sulfur-containing liquid catalyst comprising inferior catalytic cracking diesel fuel in accordance with a certain proportion by weight. The inferior catalytic cracking diesel fuel accounted for 25% of the total weight of the mixture. The properties of the low-temperature Fischer-Tropsch wax and the liquid catalyst comprising inferior catalytic cracking diesel fuel are listed in Table 1. The mixed raw material was fed to a first reactor **A** to mix with the hydrogen-rich gas, and the mixture was subjected to hydrogenation pretreatment in the first reaction region **A1** first, and then the hydrocracking reaction was carried out in the second reaction region **A2;** the products obtained from the hydrocracking reaction were fed to the third reaction region **B1** of the second reactor **B** with the Fischer-Tropsch diesel fuel and naphtha (see Table **1** for properties of Fischer-Tropsch diesel fuel) to carry out hydrofining reaction; the products obtained from the hydrofining reaction were fed to the fourth reaction region **B2** for hydroisomerizing pour-point depression reaction; the products obtained from the reaction were fractionated using a fractioning system to yield a diesel fuel fraction No. 1. See Table **2** for properties of the diesel fuel fraction No. 1.

Reaction conditions of the hydrogenation pretreatment: the reaction temperature was 350 °C, the reaction pressure was 6.0 MPa, liquid hourly space velocity (LHSV) was 1.0 h⁻¹, and the volume ratio of hydrogen to oil was 1000. The conditions of hydrocracking: the reaction temperature was at 380 °C, the reaction pressure was 6.0 MPa, LHSV was 1.5 h⁻¹, and the volume ratio of hydrogen to oil was 1000. The conditions of the hydrofining: the reaction temperature was 310 °C, the reaction pressure was 6.0 MPa, LHSV was 3.0 h⁻¹, and the volume ratio of hydrogen to oil was 1000. The conditions of the hydroisomerizing pour-point depression: the reaction temperature was at 350 °C, the reaction pressure was 6.0 MPa, LHSV was 3.0 h⁻¹, and the volume ratio of hydrogen to oil was 1000.

### Example 2

The example employs the same mixed raw material as that in Example **1,** and the mixed raw material was fed to a first reactor **A** to mix with the hydrogen-rich gas, and the mixture was subjected to hydrogenation pretreatment in the first reaction region **A1** first, and then the hydrocracking reaction was carried out in the second reaction region **A2;** the products obtained from the hydrocracking reaction were fed to the third reaction region **B1** of the second reactor **B** with the Fischer-Tropsch diesel fuel and naphtha (see Table **1** for properties of Fischer-Tropsch diesel fuel) to carry out hydrofining reaction; the products obtained from the hydrofining reaction were fed to the fourth reaction region **B2** for hydroisomerizing pour-point depression reaction; the products obtained from the reaction were fractionated using a fractioning system to yield a diesel fuel fraction No. 2. See Table **2** for properties of the diesel fuel fraction No. 2.

Reaction conditions of the hydrogenation pretreatment: the reaction temperature was 360 °C, the reaction pressure was 8.0 MPa, liquid hourly space velocity (LHSV) was 1.5 h⁻¹, and the volume ratio of hydrogen to oil was 1200. The conditions of hydrocracking: the reaction temperature was at 390 °C, the reaction pressure was 8.0 MPa, LHSV was 2.0 h⁻¹, and the volume ratio of hydrogen to oil was 1200. The conditions of the hydrofining: the reaction temperature was 330 °C, the reaction pressure was 8.0 MPa, LHSV was 4.0 h⁻¹, and the volume ratio of hydrogen to oil was 1200. The conditions of the hydroisomerizing pour-point depression: the reaction temperature was at 360 °C, the reaction pressure was 8.0 MPa, LHSV was 3.0 h⁻¹, and the volume ratio of hydrogen to oil was 1200.

### Example 3

Low-temperature Fischer-Tropsch wax was mixed with a sulfur-containing liquid catalyst comprising inferior catalytic cracking diesel fuel in accordance with a certain proportion by weight. The inferior catalytic cracking diesel fuel accounted for 40% of the total weight of the mixture. The mixed raw material was fed to a first reactor **A** to mix with the hydrogen-rich gas, and the mixture was subjected to hydrogenation pretreatment in the first reaction region **A1** first, and then the hydrocracking reaction was carried out in the second reaction region **A2;** the products obtained from the hydrocracking reaction were fed to the third reaction region **B1** of the second reactor **B** with the Fischer-Tropsch diesel fuel and naphtha (see Table **1** for properties of Fischer-Tropsch diesel fuel) to carry out hydrofining reaction; the products obtained from the hydrofining reaction were fed to the fourth reaction region **B2** for hydroisomerizing pour-point depression reaction; the products obtained from the reaction were fractionated using a fractioning system to yield a diesel fuel fraction No. 3. See Table **2** for properties of the diesel fuel fraction No. 3.

Reaction conditions of the hydrogenation pretreatment: the reaction temperature was 365 °C, the reaction pressure was 8.0 MPa, liquid hourly space velocity (LHSV) was 1.5 h⁻¹, and the volume ratio of hydrogen to oil was 1200. The conditions of hydrocracking: the reaction temperature was at 380 °C, the reaction pressure was 8.0 MPa, LHSV was 2.0 h⁻¹, and the volume ratio of hydrogen to oil was 1200. The conditions of the hydrofining: the reaction temperature was 330 °C, the reaction pressure was 8.0 MPa, LHSV was 4.0 h⁻¹, and the volume ratio of hydrogen to oil was 1200. The conditions of the hydroisomerizing pour-point depression: the reaction temperature was at 360 °C, the reaction pressure was 8.0 MPa, LHSV was 4.0 h⁻¹, and the volume ratio of hydrogen to oil was 1200.

### Example 4

Low-temperature Fischer-Tropsch wax was mixed with a sulfur-containing liquid catalyst comprising inferior coking diesel fuel in accordance with a certain proportion by weight. The inferior coking diesel fuel accounted for 40% of the total weight of the mixture. The properties of the liquid catalyst comprising inferior coking diesel fuel are listed in Table **1.** The mixed raw material was fed to a first reactor **A** to mix with the hydrogen-rich gas, and the mixture was subjected to hydrogenation pretreatment in the first reaction region **A1** first, and then the hydrocracking reaction was carried out in the second reaction region **A2;** the products obtained from the hydrocracking reaction were fed to the third reaction region **B1** of the second reactor **B** with the Fischer-Tropsch diesel fuel and naphtha (see Table **1** for properties of Fischer-Tropsch diesel fuel) to carry out hydrofining reaction; the products obtained from the hydrofining reaction were fed to the fourth reaction region **B2** for hydroisomerizing pour-point depression reaction; the products obtained from the reaction were fractionated using a fractioning system to yield a diesel fuel fraction No. 4. See Table **2** for properties of the diesel fuel fraction No. 4.

Reaction conditions of the hydrogenation pretreatment: the reaction temperature was 365 °C, the reaction pressure was 8.0 MPa, liquid hourly space velocity (LHSV) was 1.5 h⁻¹, and the volume ratio of hydrogen to oil was 1200. The conditions of hydrocracking: the reaction temperature was at 380 °C, the reaction pressure was 8.0 MPa, LHSV was 2.0 h⁻¹, and the volume ratio of hydrogen to oil was 1200. The conditions of the hydrofining: the reaction temperature was 330 °C, the reaction pressure was 8.0 MPa, LHSV was 4.0 h⁻¹, and the volume ratio of hydrogen to oil was 1200. The conditions of the hydroisomerizing pour-point depression: the reaction temperature was at 360 °C, the reaction pressure was 8.0 MPa, LHSV was 4.0 h⁻¹, and the volume ratio of hydrogen to oil was 1200.

### Comparison Example 1

Low-temperature Fischer-Tropsch wax was fed to a first reactor A to mix with the hydrogen-rich gas, and the mixture was subjected to hydrogenation pretreatment in the first reaction region **A1** first, and then the hydrocracking reaction was carried out in the second reaction region **A2;** the products obtained from the hydrocracking reaction were fed to the third reaction region **B1** of the second reactor **B** with the Fischer-Tropsch diesel fuel and naphtha (see Table **1** for properties of Fischer-Tropsch diesel fuel) to carry out hydrofining reaction; the products obtained from the hydrofining reaction were fed to the fourth reaction region **B2** for hydroisomerizing pour-point depression reaction; the products obtained from the reaction were fractionated using a fractioning system to yield a diesel fuel fraction No.5. See Table **2** for properties of the diesel fuel fraction No. 5.

Reaction conditions of the hydrogenation pretreatment: the reaction temperature was 330 °C, the reaction pressure was 8.0 MPa, liquid hourly space velocity (LHSV) was 1.5 h⁻¹, and the volume ratio of hydrogen to oil was 1000. The conditions of hydrocracking: the reaction temperature was at 400 °C, the reaction pressure was 8.0 MPa, LHSV was 1.5 h⁻¹, and the volume ratio of hydrogen to oil was 1000. The conditions of the hydrofining: the reaction temperature was 330 °C, the reaction pressure was 8.0 MPa, LHSV was 3.0 h⁻¹, and the volume ratio of hydrogen to oil was 1000. The conditions of the hydroisomerizing pour-point depression: the reaction temperature was at 360 °C, the reaction pressure was 8.0 MPa, LHSV was 3.0 h⁻¹, and the volume ratio of hydrogen to oil was 1000.

**Table 1 Properties of Fischer-Tropsch wax, diesel fuel, and liquid catalysts**

| Properties | Fischer-Tro psch wax | Fischer-Tropsc h diesel fuel | Inferior catalytic cracking diesel fuel | Inferior coking diesel fuel |
|---|---|---|---|---|
| Density (20 °C)/g/cm³ | 0.7967 | 0.7621 | 0.8962 | 0.8373 |
| distillation range / °C | 217-740 | 138-328 | 184-360 | 203-345 |
| Sulphur/µg/g | - | - | 7000 | 5000 |
| Nitrogen/µg/g | - | - | 882 | 1212 |
| Pour point/ °C | - | 25 | -8 | -11 |
| Cetane number | - | 69.8 | 33.9 | 49 |

**Table 2 Properties of products**

| | Example 1 | Example 2 | Example 3 | Example 4 | Comparison example 1 |
|---|---|---|---|---|---|
| Properties of products | Diesel fuel No. 1 | Diesel fuel No. 2 | Diesel fuel No. 3 | Diesel fuel No. 4 | Diesel fuel No. 5 |
| Density (20 °C)/g/cm³ | 0.8243 | 0.8211 | 0.8325 | 0.8200 | 0.7413 |
| Sulphur/µg/g | <10.0 | <10.0 | <10.0 | <10.0 | <1.0 |
| Pour point/ °C | -25 | -31 | -35 | -36 | 2 |
| Cetane number | 55 | 54 | 53 | 58 | 61 |

From Table 2, when the liquid catalyst is doped at certain proportion through the method of the invention, the density of the diesel fuel fraction acquired through transformation from the low-temperature Fischer-Tropsch synthesis product is greater than 0.82 g/cm³, its sulfur content is less than 10.0 µg/g, and its cetane number is greater than 51, thereby meeting the indexes of Euro V standard. Further, through the method of the invention, the pour point of the acquired diesel fuel is below 0 °C which can meet the requirements of low-temperature flow property of diesel fuel in a low-temperature area. However, if the Fischer-Tropsch wax is subjected to hydrocracking independently, for example at proportion 1, the density of the acquired diesel fuel is 0.7413 g/cm³ only, the density thereof cannot achieve the indexes of diesel fuel for vehicle, and the pour point thereof is at 2 °C only which cannot meet the requirements of low-temperature diesel fuel in the low-temperature area.

## Claims

1. A method of hydrotreatment of low-temperature Fischer-Tropsch synthesis products, the method comprising:
1) mixing Fischer-Tropsch wax with a sulfur-containing liquid crystal at a certain proportion, contacting a resulting mixture with hydrogen, feeding a hydrogen-containing mixture to a first reaction region comprising a hydrogenation pretreatment catalyst, feeding an effluent from the first reaction region to a second reaction region comprising a hydrocracking catalyst, and carrying out hydrocracking reaction;
2) feeding a hydrocracking product from the second reaction region and Fischer-Tropsch naphtha and diesel fuel to a third reaction region comprising a hydrofining catalyst, carrying out hydrofining reaction; feeding an effluent from the hydrofining reaction to a fourth reaction region comprising a hydroisomerizing pour-point depressant catalyst, and carrying out isomerizing pour-point depression reaction; and
3) feeding an effluent from the fourth reaction region to a gas-liquid separation system C to yield hydrogen-rich gas and liquid products, recycling the hydrogen-rich gas, feeding the liquid products to a distilling system D, to yield naphtha, diesel fuel and tail oil, and returning the tail oil to the second reaction region.

2. The method of claim 1, wherein the sulfur-containing liquid catalyst in 1) is inferior catalytic cracking diesel fuel or coking diesel fuel; and the sulfur-containing liquid catalyst accounts for 20-50 wt. % of a total of the sulfur-containing liquid catalyst and the Fischer-Tropsch wax.

3. The method of claim 1 or 2, wherein in 1), the hydrogenation pretreatment is carried out under the following conditions: a reaction temperature is at 300-370 °C; a hydrogen partial pressure is 4.0-10 MPa; a volume velocity is 0.5-2.0 h⁻¹; and a volume ratio of hydrogen to oil is 500-1500.

4. The method of claim 1 or 2, wherein in 1), the hydrocracking reaction is carried out under the following conditions: a reaction temperature is at 330-410 °C; a hydrogen partial pressure is 4.0-10 MPa; a volume velocity is 0.4-6.0 h⁻¹; and a volume ratio of hydrogen to oil is 600-1500.

5. The method of claim 1 or 2, wherein in 2), the hydrofining reaction is carried out under the following conditions: a reaction temperature is at 280-340 °C; a hydrogen partial pressure is 4.0-10 MPa; a volume velocity is 0.4-6.0 h⁻¹; and a volume ratio of hydrogen to oil is 500-1200.

6. The method of claim 1 or 2, wherein in 2), the isomerizing pour-point depression reaction is carried out under the following conditions: a reaction temperature is at 280-400 °C; a hydrogen partial pressure is 4.0-10 MPa; a volume velocity is 0.4-6.0 h⁻¹; and a volume ratio of hydrogen to oil is 400-1200.

7. The method of claim 1 or 2, wherein the hydrogenation pretreatment or hydrofining catalyst comprises a carrier selected from aluminum oxide or silicon-containing aluminum oxide and a hydrogenation active metal loaded on the carrier; the hydrogenation active metal comprises at least two active ingredients of non-noble metals of VIB and/or VIII family; and the content of active metal oxides is 25-40 wt. % of a total weight of the catalyst.

8. The method of claim 1 or 2, wherein the hydrocracking catalyst comprises an acidic material as a carrier selected from amorphous silica-alumina, molecular sieve, or a mixture thereof, and a hydrogenation active metal which is a combination of a VIB-family metal element comprising molybdenum (Mo) and Tungsten (W) and a VIII-family metal element comprising cobalt (Co), Nickle (Ni), platinum (Pt) and palladium (Pd); and the content of active metal oxides is 25-40 wt. % of a total weight of the catalyst.

9. The method of claim 8, wherein the carrier of the hydrocracking catalyst is a combination of amorphous silica-alumina and one or more selected from a Y-type molecular sieve, a β molecular sieve, a ZSM molecular sieve and an SAPO molecular sieve; and the hydrogenation active metal is a combination of W-Ni, Mo-Ni or Mo-Co.

10. The method of claim 1 or 2, wherein the tail oil separated in 3) is recycled completely or partially to the second reaction region for hydrocracking.
